# EUROPÄISCHE PATENTSCHRIFT

(11) **EP 0 487 845 B1**
(45) Veröffentlichungstag und Bekanntmachung des Hinweises auf die Patenterteilung: **07.12.1994**
(21) Anmeldenummer: 91115084.5
(22) Anmeldetag: 06.09.1991
(51) Int. Cl.: B01D 29/15, B01D 29/96

(54) **Filterring**
Filter ring
Anneau de filtre

(30) Priorität: 27.11.1990 DE 9016138 U
(43) Veröffentlichungstag der Anmeldung: 03.06.1992
(73) Patentinhaber: KARL KÜFNER KG, D-72461 Albstadt (DE)
(72) Erfinder: Meiritz, Horst, W-7470 Albstadt-2 (DE); Sebig, Jörg, W-7460 Balingen-12 (DE); Haasis, Christian, W-7470 Albstadt (DE)
(74) Vertreter: Eitle, Werner, Dipl.-Ing.

(56) Entgegenhaltungen:
- FR-A- 2 273 574
- US-A- 3 305 161
- US-A- 4 204 960

## Beschreibung

Die Erfindung betrifft einen Filterring zu seinem Einsetzen in ringförmige Öffnungen oder Durchbrechungen der Wandung von Gase oder Flüssigkeiten aufnehmenden oder von diesen durchströmten Hohlkörpern, welcher Filterring in seiner einen Hohlraum umschließenden Wand einen sich parallel zur Ringachse über die gesamte Achslänge des Ringes erstreckenden Schlitz hat, wobei die beiderseits dieses Schlitzes befindlichen Wandteile des Ringes durch einen Schnappverschluß miteinander verbunden sind. Ein derartiger Filterring wird von der Anmelderin seit einigen Monaten auf den Markt gebracht.

Filterringe dieser Art werden in der Regel in an den Außenseiten der Hohlkörperwandung, z.B. der Wandung eines Rohres angeordnete Nuten eingesetzt, die im Bereich der Öffnung oder Durchbrechung der Hohlkörperwandung vorgesehen sind. Zum Einsetzen in diese Nuten müssen die Filterringe aufgeweitet oder geöffnet werden, um über die Außenwand des Hohlkörpers übergeschoben werden zu können. Hierzu dient der bei dem vorgenannten bekannten Filterring vorgesehene, sich über die gesamte Achslänge des Ringes erstreckende Schlitz, der eine Trennung der Ringwand an einer Umfangsstelle des Filterringes und damit eine Aufweitung des Filterringes auf einen Ringdurchmesser erlaubt, der ein Überschieben über die Außenfläche des Hohlkörpers hinweg erlaubt. Nach dem Einsetzen des Filterrings in die Nut kann der Ring durch Aneinanderdrücken seiner beiderseits des Schlitzes befindlichen Wandteile und deren feste Verbindung mittels des Schnappverschlusses wieder geschlossen und auf seinen Ausgangsdurchmesser gebracht werden, der dem Durchmesser des Nutbodens entspricht.

Bei dem bekannten Filterring wird der Schnappverschluß durch eine Rastrippe gebildet, die an dem einen Wandteile des Ringes angeordnet ist, sich über die gesamte axiale Ringlänge erstreckt und in eine am anderen Wandteil ebenso angeordnete und sich erstreckende Nut einrastbar ist. Da die Einrastung festhaltend sein soll, sind die einander gegenüberliegenden Seitenflächen der Rastrippe und Rastnut so hinterschnitten, daß sie sich gegenseitig hintergreifen (Klipsverschluß). Diese Ausbildung erfordert jedoch eine relativ große Wandstärke des Ringes, da die hinterschnittene Rastrippe und hinterschnittene Nut bei einem dünnwandigen Ring aus Raum- und Festigkeitsgründen nicht praktikabel ist.

Der Erfindung liegt daher die Aufgabe zugrunde, bei einem Filterring der eingangs genannten Gattung die Verbindung der beiderseits seines Schlitzes befindlichen Wandteile miteinander so zu gestalten, daß sie auch bei relativ dünnwandigen Ringen praktikabel ist. Dies wird erfindungsgemäß dadurch erreicht, daß der zur Verbindung der beiden Wandteile dienende Schnappverschluß mindestens zwei Nasen hat, die an dem Stirnende eines Wandteils des Ringes in dessen Axialrichtung nebeneinander angeordnet und in ebenso nebeneinander angeordnete Nuten am Stirnende des anderen Wandteils des Ringes einrastbar sind, daß die Nasen und Nuten sich über die gesamte Dicke der Ringwand erstrecken und in Verbindungsrichtung hinterschnittene und einander hintergreifende Seitenflächen haben. Diese einander hintergreifenden Seitenflächen können in Seitenansicht der Ringwandung im wesentlichen Schwalbenschwanzform haben. In dieser erfindungsgemäßen Ausbildung kann der Schnappverschluß auch an der Wandung eines relativ dünnwandigen Filterringes untergebracht werden, ohne daß die Festigkeit des Filterringes und der Schnappverbindung dabei beeinträchtigt wird.

Zur genauen Zentrierung der miteinander zu verbindenden Wandteile können die Stirnflächen dieser Wandteile in verbundener Lage aneinanderstoßen und in dieser Lage ineinandergreifend, z.B. in Pfeilform, profiliert sein. Darüber hinaus können auch die Nasen und Nuten der Schnappverbindung an ihren einander gegenüberliegenden Seitenwänden ineinandergreifend profiliert sein. Beide Profilierungen können Pfeilform haben.

In der Zeichnung ist ein besonders vorteilhaftes Ausführungsbeispiel dargestellt, welches im folgenden näher beschrieben wird:
- Fig. 1: zeigt den Filterring dieser Ausführungsform im Querschitt,
- Fig. 2: ist eine Seitenansicht dieses Ringes,
- Fig. 3: zeigt diesen Ring in geöffnetem Zustand im Querschnitt wie Fig. 1,
- Fig. 4: ist eine vergrößerte Detaildarstellung des Schnappverschlusses dieses Filters in Seitenansicht des Ringes,
- Fig. 5: ist eine Stirnansicht des die Schnappnasen aufweisenden Teiles des Schnappverschlusses in Richtung des Pfeiles A in Fig. 4,
- Fig. 6: ist eine Stirnansicht des die Nuten aufweisenden Teiles des Schnappverschlusses in Richtung des Pfeiles B in Fig. 4.

Die zylindrische Wandung des in der Zeichnung dargestellten Filterringes 1 hat einen Rahmen, der von zwei jeweils an den Stirnenden des Filterringes befindlichen ringförmigen Stegen 2 und diese miteinander verbindenden, in Axialrichtung des Filterringes sich erstreckenden Verbindungsstegen 3 gebildet wird. An der Innenseite dieses Rahmens ist in diesen ein Filtergewebe 4 eingespannt, durch welches zwischen den Rahmenstegen 2, 3 hindurch ein Gas oder eine Flüssigkeit unter Filtrierung hindurchströmen können. Das Filtergewebe 4 kann in die Rahmenteile 2, 3, 6, 7 und 8 eingeschweißt sein. Einer der Verbindungsstege 3 ist durch einen Längsschlitz 5 in zwei Wandteile 6 und 7 getrennt, welcher Längsschlitz sich über die gesamte axiale Ringlänge erstreckt. Der diametral gegenüberliegende Verbindungssteg ist durch Materialschwächung zu einem Gelenk 8 ausgebildet, mittels welchem die beiderseits des Trennschlitzes 5 befindlichen Wandteile 6, 7 des Ringes unter dessen Aufweitung voneinander wegbewegt werden können. Bei geschlossenem Filterring liegen die beiden Teile 6, 7 mit ihren pfeilförmigen profilierten Stirnflächen 9, 10 aneinander an.

Um einen festen Zusammenhalt der durch den Schlitz 5 getrennten Teile 6, 7 des Filterringes 1 in auf den Hohlkörper aufgesetzter oder in dessen Nut eingesetzter Lage zu ermöglichen, sind an dem einen Teil 6 zwei schwalbenschwanzförmige Schnappnasen 11 vorgesehen, die in Axialrichtung des Ringes im Abstand nebeneinander angeordnet und in ebenso am anderen Wandteil 7 angeordnet und in ebenso am anderen Wandteil 7 angeordnete schwalbenschwanzförmige Nuten 12 einrastbar sind.

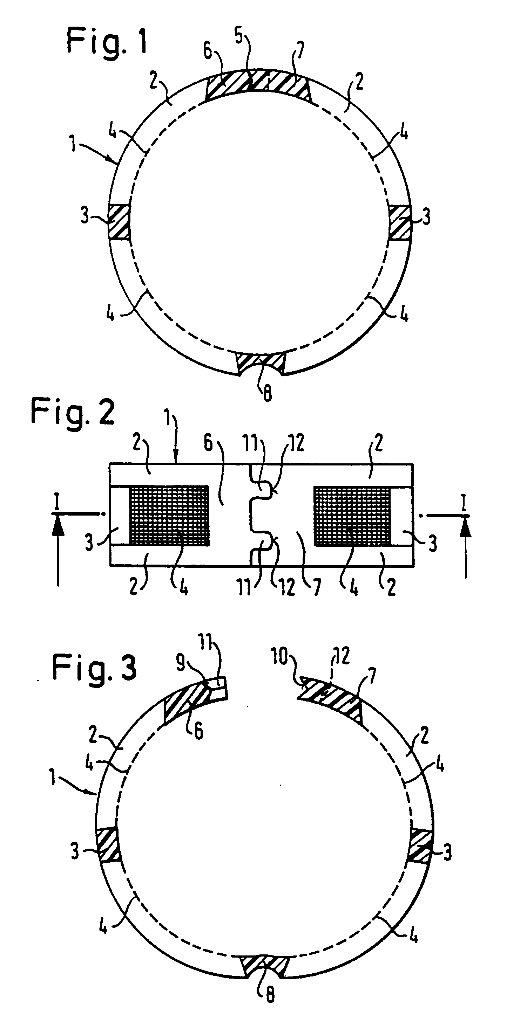

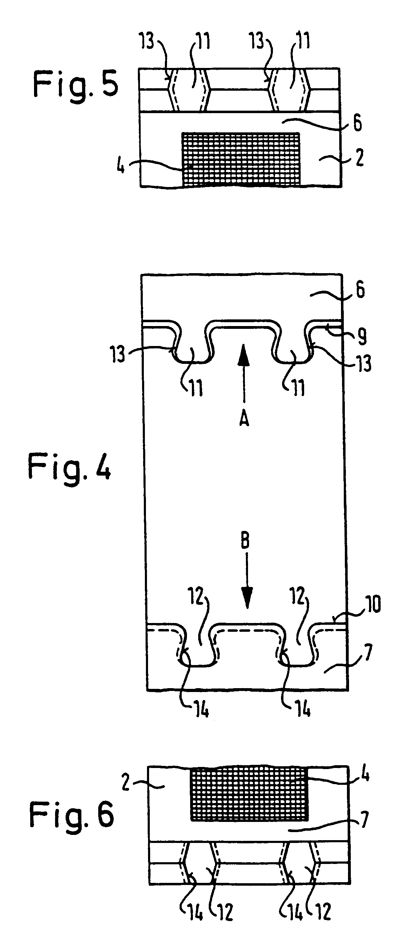

Die Nasen und Nuten erstrecken sich über die gesamte Dicke der Ringwand, wie sich aus Fig. 3, 5 und 6 ergibt. Die einander gegenüberliegenden Seitenwände 13 und 14 der Schnappnasen 11 und Nuten 12 sind ebenfalls ineinandergreifend pfeilförmig profiliert, so daß eine exakte gegenseitige Zentrierung oder Ausrichtung der beiden Teile 6, 7 der Ringwandung in miteinander verbundener Stellung gegeben ist.

## Patentansprüche

1. Filterring zu seinem Einsetzen in ringförmige Öffnungen oder Durchbrechungen der Wandung von Gase oder Flüssigkeiten aufnehmenden oder von diesen durchströmten Hohlkörpern, welcher Filterring (1) in seiner einen Hohlraum umschließenden Wand einen sich parallel zur Ringachse über die gesamte Achslänge des Ringes erstreckenden Schlitz (5) hat, wobei die beiderseits dieses Schlitzes befindlichen Wandteile (6, 7) des Ringes durch einen Schnappverschluß miteinander verbunden sind, dadurch gekennzeichnet,
a) daß der Schnappverschluß mindestens zwei Nasen (11) hat, die an dem Stirnende eines Wandteils (6) des Ringes (1) in dessen Axialrichtung nebeneinander angeordnet und in ebenso nebeneinander angeordnete Nuten (12) am Stirnende des anderen Wandteils (7) des Ringes einrastbar sind,
b) daß die Nasen (11) und Nuten (12) sich über die gesamte Dicke der Ringwand erstrecken
c) und in Verbindungsrichtung hinterschnittene und einander hintergreifende Seitenflächen (13, 14) haben.

2. Filterring nach Anspruch 1, dadurch gekennzeichnet, daß die Nasen (11) und Nuten (12) in Seitenansicht der Ringwand im wesentlichen Schwalbenschwanzform haben.

3. Filterring nach Anspruch 1, dadurch gekennzeichnet, daß die Stirnflächen (9, 10) der beiden Wandteile (6, 7) in verbundener Lage aneinanderstoßen und ineinandergreifend profiliert sind.

4. Filterring nach Anspruch 3, dadurch gekennzeichnet, daß die Profilierung Pfeilform hat.

5. Filterring nach Anspruch 1, dadurch gekennzeichnet, daß die Nasen (11) und Nuten (12) an ihren einander gegenüberliegenden Seitenwänden (13, 14) ineinandergreifend profiliert sind.

6. Filterring nach Anspruch 5, dadurch gekennzeichnet, daß die Profilierung Pfeilform hat.

## Claims

1. Filter ring for insertion thereof in annular openings or apertures in the wall of hollow bodies which receive gases or liquids or through which these flow, which filter ring (1) in its wall surrounding a cavity has a slot (5) extending parallel to the ring axis over the whole axial length of the ring, wherein the wall portions (6, 7) of the ring located on both sides of this slot are connected to each other by a snap fastening, characterised
a) in that the snap fastening has at least two projections (11) which are arranged adjacent to each other at the end of one wall portion (6) of the ring (1) in the axial direction thereof and can be latched in grooves (12) similarly arranged adjacent to each other at the end of the other wall portion (7) of the ring,
b) in that the projections (11) and grooves (12) extend over the whole thickness of the ring wall
c) and in the direction of connection have undercut side faces (13, 14) engaging behind each other.

2. Filter ring according to claim 1, characterised in that the projections (11) and grooves (12) are essentially dovetail-shaped in a side view of the ring wall.

3. Filter ring according to claim 1, characterised in that the end faces (9, 10) of the two wall portions (6, 7) are butted together in the connected position and profiled to interlock with each other.

4. Filter ring according to claim 3, characterised in that the profile is arrow-shaped.

5. Filter ring according to claim 1, characterised in that the projections (11) and grooves (12) are profiled to interlock with each other at their side walls (13, 14) opposite each other.

6. Filter ring according to claim 5, characterized in that the profile is arrow-shaped.

## Revendications

1. Anneau de filtre pour être positionné dans des ouvertures ou passages annulaires ménagés dans la paroi de corps creux contenant des gaz ou des liquides ou traversés par un écoulement de ceux-ci, lequel anneau de filtre (1) a dans sa paroi, entourant la cavité, une fente (5) s'étendant parallèlement à l'axe de l'anneau, sur toute la longueur axiale de l'anneau, les parties de paroi (6, 7), se trouvant de part et d'autre de cette fente, de l'anneau étant reliées ensemble au moyen d'une fermeture à déclic, caractérisé en ce que
a) la fermeture à déclic a au moins deux ergots (11), qui sont disposés l'un à côté de l'autre, sur l'extrémité frontale d'une partie de paroi (6) de l'anneau (1) dans sa direction axiale et qui sont encliquetables dans des rainures (12) également disposées l'une à côté de l'autre sur l'autre extrémité frontale de la partie de paroi (7) de l'anneau,
b) en ce que les ergots (11) et les rainures (12) s'étendent sur toute l'épaisseur de la paroi annulaire
c) et en ce qu'ils ont, dans la direction de la liaison, des surfaces latérales (13, 14) dotées d'une contre-dépouille et se saisissant par l'arrière l'une l'autre.

2. Anneau de filtre selon la revendication 1, caractérisé en ce que les ergots (11) et les rainures (12) ont, en vue de côté de la paroi annulaire, une forme sensiblement en queue d'aronde.

3. Anneau de filtre selon la revendication 1, caractérisé en ce que les faces frontales (9, 10) des deux parties de paroi (6, 7) viennent se placer l'une à l'autre en position reliée et sont profilées de façon à s'engager l'une dans l'autre.

4. Anneau de filtre selon la revendication 3, caractérisé en ce que le profilage a une forme en flèche.

5. Anneau de filtre selon la revendication 1, caractérisé en ce que les ergots (11) et les rainures (12) sont profilés, sur leurs parois latérales (13, 14), placées en regard de façon à s'engager l'une dans l'autre.

6. Anneau de filtre selon la revendication 5, caractérisé en ce que le profilage a une forme en flèche.
